# EUROPEAN PATENT APPLICATION

(11) **EP 4 632 303 A1**
(43) Date of publication of application: **15.10.2025**
(21) Application number: 23911768.2
(22) Date of filing: 14.12.2023
(51) Int. Cl.: F25J 1/00, C01B 3/00

(54) **HYDROGEN PLANT**

(30) Priority: 28.12.2022 JP 2022211632
(71) Applicant: KAWASAKI JUKOGYO KABUSHIKI KAISHA, Kobe-shi, Hyogo 650-8670 (JP)
(72) Inventor: KIMURA, Takehiro, Kobe-shi, Hyogo 650-8670 (JP)
(74) Representative: Müller-Boré & Partner Patentanwälte PartG mbB
(86) International application number: PCT/JP2023/044932
(87) International publication number: WO 2024/142987

(57) **Abstract**

A hydrogen plant includes hydrogen liquefiers, individual pipes, a confluent pipe, and branch pipes. The hydrogen liquefiers convert hydrogen gas into liquefied hydrogen. The individual pipes respectively belong to the hydrogen liquefiers and serve as hydrogen flow passages. The confluent pipe includes a confluence where downstream ends of the individual pipes of the hydrogen liquefiers meet to combine to one, and a collecting pipe located at a downstream position of the confluence. The branch pipes respectively branch from the individual pipes to each take out hydrogen flow having a phase of gas or two phases of liquid and gas.

## Description

### Technical Field

The present disclosure relates to a hydrogen plant including a hydrogen liquefier that converts hydrogen gas into liquefied hydrogen.

### Background Art

Established on a large-scale site for production and dispatch of liquefied hydrogen is a hydrogen plant including: a hydrogen liquefier that converts hydrogen gas produced through reforming of a fossil fuel or water electrolysis into liquefied hydrogen; and a liquefied hydrogen storage tank that temporarily stores the liquefied hydrogen. The liquefied hydrogen in the tank is sent out to a carrier, such as a hydrogen carrier or a lorry, to reach a demand destination (e.g., see Patent Literature 1).

To meet a request for production of a large amount of liquefied hydrogen, hydrogen liquefiers are arranged parallel to each other. In this case, individual pipes to take out liquefied hydrogen respectively from the hydrogen liquefiers are desirably combined to constitute one collecting pipe and guide the taken liquefied hydrogen to one or more liquefied hydrogen storage tanks.

Unfortunately, hydrogen flow having a phase of gas or two phases of gas and liquid may advance in any of the individual pipes of the associated hydrogen liquefiers. For instance, at activation of a certain hydrogen liquefier, hydrogen flow containing hydrogen gas having yet to be liquefied hydrogen may advance in the individual pipe due to unsatisfactory start-up of a cooling system of the hydrogen liquefier. Similar hydrogen flow may be generated at suspension or stop of the hydrogen liquefier. Activating or suspending any one of the hydrogen liquefiers during normal operation of another one of the hydrogen liquefiers would make liquefied hydrogen with a degree of supercooling and gaseous hydrogen mix with each other in the collecting pipe. This may cause hammering which leads to vibration of collecting pipe, a noise at the collecting pipe, or damage to the collecting pipe.

### Citation List

### Patent Literature

Patent Literature 1: Japanese Unexamined Patent Publication No. 2020-24064

### Summary of Invention

An object of the present disclosure is to provide a hydrogen plant having a configuration in which individual pipes to take out liquefied hydrogen respectively from hydrogen liquefiers combine to constitute one collecting pipe that suppresses containing a mixture of liquefied hydrogen and gaseous hydrogen therein.

A hydrogen plant according to an aspect of the present disclosure includes: hydrogen liquefiers that convert hydrogen gas into liquefied hydrogen; individual pipes respectively belonging to the hydrogen liquefiers and serving as hydrogen flow passages; a confluent pipe including a confluence where downstream ends of the individual pipes of the hydrogen liquefiers meet to combine to one, and a collecting pipe located at a downstream position of the confluence; and branch pipes respectively branching from the individual pipes to each take out hydrogen flow having a phase of gas or two phases of gas and liquid.

### Effects of the invention

The present disclosure achieves a hydrogen plant having a configuration in which individual pipes to take out liquefied hydrogen respectively from hydrogen liquefiers combine to one collecting pipe that suppresses containing a mixture of liquefied hydrogen and gaseous hydrogen therein.

### Brief Description of Drawings

Fig. 1 is a system diagram schematically illustrating an overall configuration of a hydrogen plant to produce liquefied hydrogen.
Fig. 2 is a system diagram illustrating a hydrogen plant according to a first embodiment of the present disclosure.
Fig. 3 is a system diagram illustrating a hydrogen plant according to a second embodiment.
Fig. 4 is a system diagram illustrating a hydrogen plant according to a third embodiment.

### Description of Embodiments

Hereinafter, embodiments of a hydrogen plant according to the disclosure will be described with reference to the accompanying drawings. Such a hydrogen plant according to the present disclosure is applicable to various kinds of plants each including hydrogen liquefiers that liquefy hydrogen gas to produce liquefied hydrogen. For instance, the hydrogen plant according to the present disclosure is adoptable for a line to produce liquefied hydrogen from raw material hydrogen gas on a large-scale site for production and dispatch of the liquefied hydrogen, a line to re-liquefy the Boil Off Gas (hereinafter, referred to as "BOG) generated at production of liquefied hydrogen or at the loading of the liquefied hydrogen to a carrier, a line to collect and re-liquefy the BOG generated at the loading in a facility that receives liquefied hydrogen, and other line.

### [Overall configuration of the hydrogen plant]

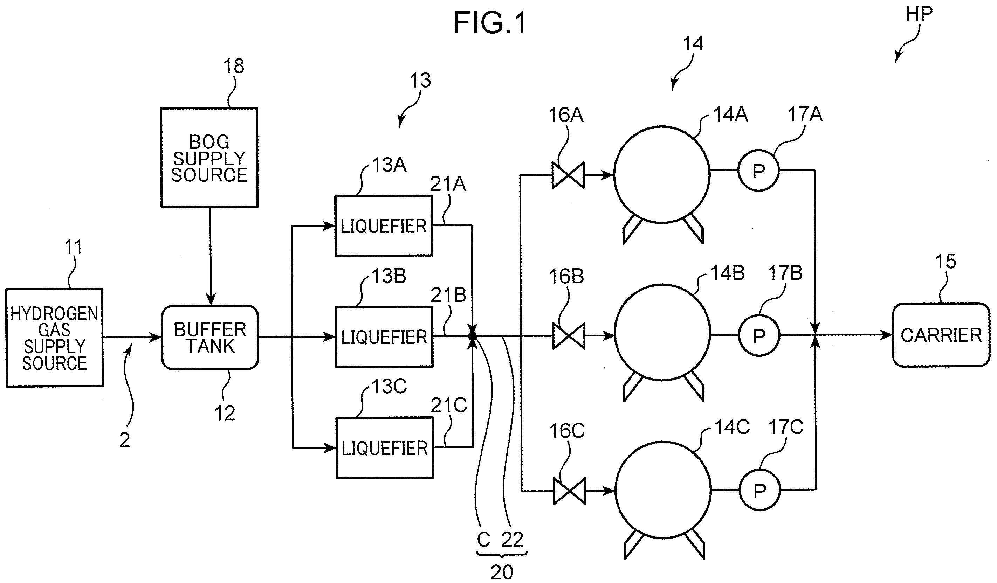

First, an overall configuration of a plant including hydrogen liquefiers to be a premise of the hydrogen plant according to the present disclosure will be described. Fig. 1 is a system diagram schematically illustrating an example overall configuration of a hydrogen plant HP to produce liquefied hydrogen. The hydrogen plant HP liquefies raw material hydrogen gas and stores the liquefied hydrogen to load the stored liquefied hydrogen to a carrier 15. The hydrogen plant HP includes a hydrogen gas supply source 11, a buffer tank 12, a liquefier 13 or hydrogen liquefier, and a liquefied hydrogen storage tank 14. These elements are connected to one another by a transport pipe 2 to serve as a hydrogen flow passage. Fig. 1 further schematically illustrates a BOG supply source 18 as a collecting system that collects the BOG to be generated in the hydrogen plant HP.

The hydrogen gas supply source 11 generates hydrogen gas to be raw material for liquefied hydrogen. Example ways of generating such raw material hydrogen gas include a way of generating hydrogen gas from hydrocarbon, such as methane, through steam reforming, and a way of generating hydrogen gas through water electrolysis. The buffer tank 12 temporarily stores the hydrogen gas to absorb a fluctuation in the pressure of the hydrogen gas to be put in the liquefier 13. The hydrogen gas is supplied from the hydrogen gas supply source 11 and the BOG supply source 18 to the buffer tank 12.

The liquefier 13 serves as a hydrogen liquefier that converts the hydrogen gas into liquefied hydrogen, and hence cools and expands the raw material hydrogen gas sent from the buffer tank 12 to liquefy the hydrogen gas and generate liquefied hydrogen. Fig. 1 illustrates an example of three liquefiers 13 of a first liquefier 13A, a second liquefier 13B, and a third liquefier 13C arranged parallel to one another at the transport pipe 2 to increase productivity of liquefied hydrogen. Of course, two liquefiers, or four or more liquefiers may be connected to the transport pipe 2 parallel to each other or one another.

The first liquefier 13A, the second liquefier 13B, and the third liquefier 13C respectively include, as hydrogen flow passages, a first individual pipe 21A, a second individual pipe 21B, and a third individual pipe 21C branching from the transport pipe 2 parallel to one another. The individual pipes 21A, 21B, and 21C have their respective downstream ends combining to constitute one pipe defined by a confluent pipe 20. The confluent pipe 20 includes a confluence C where the downstream ends of the individual pipes 21A, 21B, and 21C meet to combine to one, and a collecting pipe 22 located at a downstream position of the confluence C.

The liquefied hydrogen storage tank 14 receives the liquefied hydrogen produced by the liquefier 13, and cools and stores the received liquefied hydrogen. The liquefied hydrogen storage tank 14 is a tank having a spherical shape as illustrated in Fig. 1, or a cylindrical shape with a flat bottom. Examples of the liquefied hydrogen storage tank 14 include a multiple shell tank including: an inner tank defining a storage space for liquefied hydrogen; an outer tank located outside the inner tank; and an insulation layer located between the inner tank and the outer tank. Alternatively, a triple shell tank additionally including an intermediate tank between an inner tank and an outer tank may be adopted.

Fig. 1 illustrates an example of three liquefied hydrogen storage tanks 14 of a first storage tank 14A, a second storage tank 14B, and a third storage tank 14C arranged parallel to one another respectively at downstream positions of the collecting pipe 22. A first selection valve 16A, a second selection valve 16B, and a third selection valve 16C are arranged respectively at upstream positions of the tanks. The liquefied hydrogen produced by the three liquefiers 13A to 13C is distributed to the three storage tanks 14A, 14B, and 14C and stored therein in response to closing or opening of the selection valves 16A, 16B, and 16C at an appropriate time. For instance, "opening" any one of the selection valves 16A, 16B, and 16C and "closing" the remaining valves allow the collecting pipe 22 to communicate with one of the storage tanks 14A, 14B, and 14C and make the produced liquefied hydrogen flow into the storage tank. Alternatively, "opening" two of the selection valves 16A, 16B, and 16C or "opening" all the valves may make the liquefied hydrogen flow into the two or all of the three storage tanks 14A, 14B, and 14C at the same time. The liquefied hydrogen storage tank 14 may be a single large tank or include four or more tanks.

A first pump 17A, a second pump 17B, and a third pump 17C are respectively provided to the pipes at respective downstream positions of the storage tanks 14A, 14B, and 14C to send out the liquefied hydrogen stored in the tanks. The pumps 17A, 17B, and 17C are activated to make the liquefied hydrogen flow out of the storage tanks 14A, 14B, and 14C to the carrier 15. The carrier 15 is, for example, a hydrogen carrier or a lorry that carries the liquefied hydrogen to a destination site.

The BOG supply source 18 collects the BOG generated in the hydrogen plant HP and supplies the BOG to the buffer tank 12 to re-liquefy the BOG. Such a mechanism that collects the BOG generated due to evaporation of liquefied hydrogen stored in the liquefied hydrogen storage tank 14 and the BOG generated at the loading of the liquefied hydrogen from the liquefied hydrogen storage tank 14 to the carrier 15 works as the BOG supply source 18.

The hydrogen plant HP having the above-described configuration normally operates any one or two of the first liquefier 13A, the second liquefier 13B, and the third liquefier 13C arranged parallel to one another, and activates or suspends the remaining two or one of the liquefiers on some occasions. Example occasions include an occasion of a change in the number of liquefiers to be operated in parallel for adjustment of a production amount of the liquefied hydrogen and an occasion of repair or maintenance of any of the liquefiers.

On such an occasion, hydrogen flow having a phase of gas or two phases of gas and liquid, that is, hydrogen gas having a normal temperature, or hydrogen fluid having two phases of liquid and gas not having been completely liquefied, may advance in any one or more of the individual pipes 21A, 21B, and 21C of the corresponding one or more of activated or suspended liquefiers 13A, 13B, and 13C. For instance, it is assumed that the first liquefier 13A is suspended, and the second liquefier 13B and the third liquefier 13C are normally operated. When the first liquefier 13A is activated from the suspended state, first, the first individual pipe 21A receives hydrogen gas flow having a normal temperature at the initial stage of the activation and thereafter receives hydrogen flow having two phases of gas and liquid due to unsatisfactory cooling of raw material hydrogen gas by a cooling system incorporated in the first liquefier 13A. The former hydrogen flow and the latter hydrogen flow advance to the collecting pipe 22 through the confluence C.

By contrast, liquefied hydrogen with a degree of supercooling flows in the second individual pipe 21B of the second liquefier 13B and the third individual pipe 21C of the third liquefier 13C and advances to the collecting pipe 22 through the confluence C, each of the liquefiers being normally operated. The collecting pipe 22 thus contains a mixture of the liquefied hydrogen with a degree of supercooling and hydrogen fluid having hydrogen gas or two phases of gas and liquid. This may cause hammering which leads to vibration of the collecting pipe 22, a noise at the collecting pipe 22, or damage to the collecting pipe 22.

A similar phenomenon may occur when only the first liquefier 13A is suspended from the state where all the three liquefiers 13A, 13B, and 13C are normally operated. Once the first liquefier 13A has been suspended, the cooling system of the first liquefier 13A gradually loses its cooling capability. As a result, hydrogen fluid having two phases of gas and liquid, or hydrogen gas flows in the first individual pipe 21A. By contrast, liquefied hydrogen with a degree of supercooling continues to flow in the second individual pipe 21B and the third individual pipe 21C. The collecting pipe 22 thus contains a mixture of the liquefied hydrogen with a degree of supercooling, and hydrogen gas or hydrogen fluid having two phases of gas and liquid. Available ways to prevent the situation may include a way of attaching exhaust valves respectively to the individual pipes 21A, 21B, and 21C and discharging or exhausting the gaseous hydrogen at activation or suspension of each of the liquefiers 13A, 13B, and 13C. Unfortunately, the way is disadvantageous in terms of a large burden on observation, and a large loss and waste due to the requirement for several days to start-up or close-down each liquefier 13. Embodiments concerning the present disclosure to solve the disadvantages will be described below.

### [First embodiment]

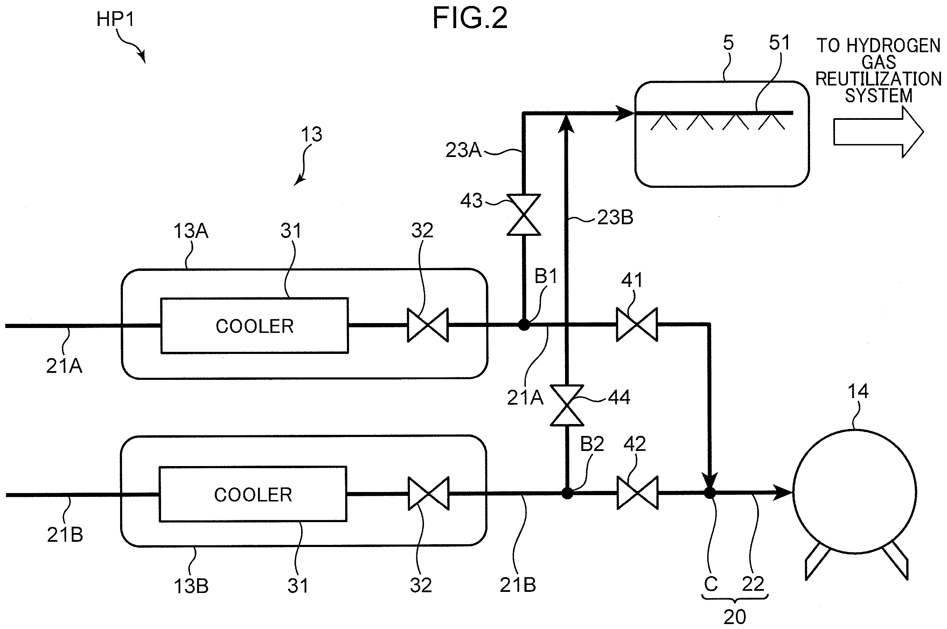

Fig. 2 is a system diagram illustrating a hydrogen plant HP1 according to the first embodiment of the present disclosure. Fig. 2 illustrates a first liquefier 13A and a first individual pipe 21A, a second liquefier 13B and a second individual pipe 21B, and a confluent pipe 20, each constituting a part of the hydrogen plant HP illustrated in Fig. 1. The hydrogen plant HP1 additionally includes: a first branch pipe 23A and a second branch pipe 23B; four valves or switch devices of a first valve 41, a second valve 42, a third valve 43, and a fourth valve 44; and a flush tank 5 or collecting tank.

Each of the first liquefier 13A and the second liquefier 13B includes a cooler 31 that cools hydrogen gas through heat exchange, and an expansion valve 32 that expands and liquefies the hydrogen gas cooled by the cooler 31. The embodiment exemplifies a Joule-Thomson valve as the expansion valve 32. For instance, the cooler 31 includes: a freezing cycle part that cools a working medium, such as hydrogen, to reach a very low temperature in a freezing cycle with a compressor, an expansion turbine, or other element; and a heat exchanger to cool raw material hydrogen gas to a state immediately before being liquefied through heat exchange by using the freezing cycle part as a cooling source. The expansion valve 32 receives the raw material hydrogen gas having a high pressure from the cooler 31 to Joule-Thomson expand, i.e., isenthalpic expand, the raw material hydrogen. In this manner, the raw material hydrogen gas is liquefied, and cryogenic liquefied hydrogen is produced. Each of the first individual pipe 21A and the second individual pipe 21B reaches the confluence C of the confluent pipe 20 via its associated cooler 31 and expansion valve 32. Although the embodiment exemplifies the liquefier 3 including the expansion valve 32 for the Joule-Thomson expansion of the hydrogen gas, any other expansion way that enables expansion of the hydrogen gas and liquefaction of the raw material hydrogen gas is adoptable in place of the expansion valve 32. For instance, a turbine is adoptable as the expansion way.

The first branch pipe 23A aims at taking out hydrogen flow having a phase of gas or two phases of gas and liquid from the first individual pipe 21A, and the second individual pipe 22B aims at taking out such hydrogen flow from the second individual pipe 21B. The first branch pipe 23A branches from the first individual pipe 21A at a first branch section B1 thereof, and the second branch pipe 23B branches from the second individual pipe 21B at a second branch section B2 thereof. Each of the first branch section B1 and the second branch section B2 is located between an outlet of the associated expansion valve 32 and the confluence C. In a case where three or more liquefiers are provided, branch pipes respectively associated with the individual pipes are attached thereto.

The flush tank 5 is a collecting tank located at respective downstream ends of the branch pipes of first branch pipe 23A and the second branch pipe 23B to receive hydrogen flow from the branch pipes. The flush tank 5 located in this manner can temporarily accommodate hydrogen gas, or hydrogen fluid having two phases of gas and liquid as taken out by the first branch pipe 23A and the second branch pipe 23B. Accordingly, the hydrogen fluid collected from each of the individual pipes 21A and 21B through the branch pipes 23A and 23B is easily reutilized. Another facility to combust the collected hydrogen fluid or another facility to make the collected hydrogen fluid harmless may be provided in place of the flush tank 5.

The flush tank 5 is a single shell tank having pressure resistance and having a smaller size than the storage tank 4. The flush tank 5 includes inside a vaporizer 51 that fulfills heat exchange to vaporize a liquid component contained in the hydrogen flow. For instance, the vaporizer 51 converts liquefied hydrogen into hydrogen gas through heat exchange with ambient gas by atomizing the liquefied hydrogen and spraying the atomized liquefied hydrogen, and making a pressure difference to reduce the pressure of the received hydrogen gas. The hydrogen gas generated through the vaporization is stored in the flush tank 5, and sent to a facility that reutilizes the hydrogen gas as needed.

Each of the first valve 41, the second valve 42, the third valve 43, and the fourth valve 44 can open and close the associated pipe to change a flow destination of the hydrogen flow at a downstream position of each of the individual pipes 21A and 21B to either the collecting pipe 22 or any of the branch pipes 23A and 23B. The first valve 41 is attached to the first individual pipe 21A between the first branch section B1 and the confluence C of the confluent pipe 20. The second valve 42 is attached to the second individual pipe 21B between the second branch section B2 and the confluence C. The third valve 43 is attached to the first branch pipe 23A, and the fourth valve 44 is attached to the second branch pipe 23B.

In normal operation of the first liquefier 13A and the second liquefier 13B to produce the liquefied hydrogen, the first valve 41 and the second valve 42 are opened, and the third valve 43 at the branch pipe 23A and the fourth valve 44 at the branch pipe 23B are closed. That is to say, in the normal operation, liquefied hydrogen with a degree of supercooling flows in each of the individual pipes 21A and 21B at a downstream position of the associated expansion valve 32. In this regard, the hydrogen flow advancing in the individual pipe 21A and the hydrogen flow advancing in the individual pipe 21B are allowed to merge downstream without any problem. Hence, the first valve 41 and the second valve 42 are opened to allow the merged hydrogen flow to advance to the confluent pipe 20. The liquefied hydrogen having flowed into the confluent pipe 20 is stored in the liquefied hydrogen storage tank 14.

By contrast, in normal operation of one of the first liquefier 13A and the second liquefier 13B and activation or suspension of the other, a closed or open state of each of the first to fourth valves 41 to 44 is changed. For instance, it is assumed that the first liquefier 13A is normally operated and the second liquefier 13B is in progress of start-up or activation, or in progress of closing-down or suspension. In this case, gaseous hydrogen flows in the second individual pipe 21B. Hence, the second valve 42 is closed and the fourth valve 44 is opened. Here, the first valve 41 is kept open, and the third valve 43 is kept closed.

The gaseous hydrogen in the second individual pipe 21B is collected in the flush tank 5 through the second branch pipe 23B in response to the operations of the valves. Compared with this, liquefied hydrogen is sent from the first individual pipe 21A to the liquefied hydrogen storage tank 14 through the collecting pipe 22. This consequently prevents the gaseous hydrogen flowing in the second individual pipe 21B and the liquefied hydrogen flowing in the first individual pipe 21A from mixing with each other in the collecting pipe 22.

In normal operation of the second liquefier 13B and activation or suspension of the first liquefier 13A, the first valve 41 for the first liquefier 13A is closed, the third valve 43 is opened, the second valve 42 for the second liquefier 13B is opened, and the fourth valve 44 is closed. In activation or suspension of both the first liquefier 13A and the second liquefier 13B, the first valve 41 and the second valve 42 are closed, and the third valve 43 at the branch pipe 23A and the fourth valve 44 at the branch pipe 23B are opened. This consequently allows the flush tank 5 to collect the gaseous hydrogen without wasting the gaseous hydrogen while preventing the gaseous hydrogen from flowing to the liquefied hydrogen storage tank 14.

Preferably, each of the first valve 41, the second valve 42, the third valve 43, and the fourth valve 44 is an automatic valve, and an unillustrated controller controls opening and closing of each valve. For instance, the controller may execute switching between closing and opening of each of the first to fourth valves 41 to 44 on the basis of a temperature of hydrogen flow in each of the individual pipe 21A in the liquefier 13A and the individual pipe 21B in the liquefier 13B, e.g. on the basis of a temperature of the hydrogen flow at the outlet of the associated expansion valve 32. When the temperature of the hydrogen flowing in each of the individual pipes 21A and 21B corresponds to the temperature of the liquefied hydrogen, the controller opens the first valve 41 and the second valve 42, and closes the third valve 43 and the fourth valve 44. When the temperature of the hydrogen flowing in each of the individual pipes 21A and 21B fails to reach the temperature of the liquefied hydrogen, the controller opens the third valve 43 or the fourth valve 44 to allow the hydrogen flow to advance to the flush tank 5.

The hydrogen plant HP1 according to the first embodiment described heretofore enables taking-out of hydrogen flow having a phase of gas or two phases of gas and liquid not having been completely liquefied through each of the first branch pipe 23A branching from the first individual pipe 21A and the second branch pipe 23B branching from the second individual pipe 21B. In other words, this configuration enables taking-out of the hydrogen flow having a phase of gas or two phases of gas and liquid from each of the individual pipes 21A and 21B before the hydrogen flow reaches the confluence C where the individual pipes 21A and 21B meet. The configuration hence suppresses mixing the liquefied hydrogen with a degree of supercooling and the gaseous hydrogen each other in the confluent pipe 20 when one or more liquefiers 13 among the liquefiers 13 arranged parallel to each other are activated or suspended. This results in avoiding an occurrence of hammering at the confluent pipe 20.

### [Second embodiment]

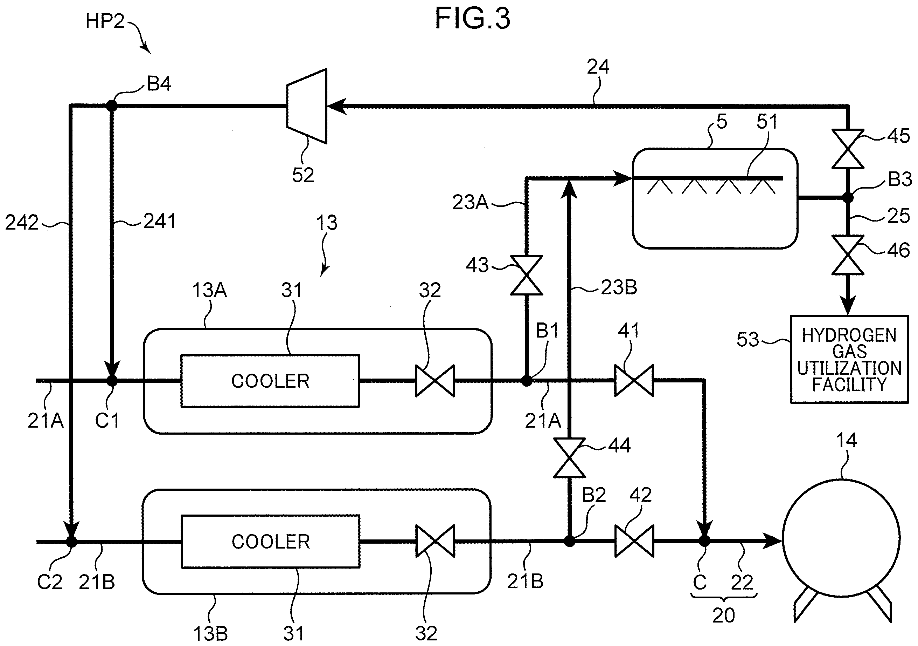

The second embodiment exemplifies a hydrogen plant HP2 additionally involving utilization of hydrogen gas collected in a flush tank 5 in comparison with the hydrogen plant HP1 according to the first embodiment. Fig. 3 is a system diagram illustrating the hydrogen plant HP2 according to the second embodiment. The hydrogen plant HP2 additionally includes a return pipe 24 and a reutilization pipe 25 at downstream positions of the flush tank 5 in comparison with the above-described hydrogen plant HP1 according to the first embodiment. Here, description for elements corresponding to the elements of the hydrogen plant HP1 will be omitted. The return pipe 24 serves as one example of the BOG supply source 18 illustrated in Fig 1.

The return pipe 24 connects the flush tank 5 and respective upstream ends of a first liquefier 13A and a second liquefier 13B to each other. The return pipe 24 serves to return hydrogen gas collected in the flush tank 5 to the upstream ends of the first liquefier 13A and the second liquefier 13B. The return pipe 24 is provided with a fifth valve 45 and a compressor 52. The reutilization pipe 25 branches from the return pipe 24 at a third branch section B3 thereof and extends to a hydrogen gas utilization facility 53. The reutilization pipe 25 guides the hydrogen gas collected in the flush tank 5 to the hydrogen gas utilization facility 53. The reutilization pipe 25 is provided with a sixth valve 46.

The fifth valve 45 is provided at the return pipe 24 between the third branch section B3 and the compressor 52, and opens and closes the return pipe 24. The compressor 52 compresses the hydrogen gas stored in the flush tank 5 to send the compressed hydrogen gas to the upstream ends of the liquefiers 13A and 13B through the return pipe 24. The return pipe 24 is provided with a fourth branch section B4, where a first branch rerun pipe 241 and a second branch return pipe 242 branch, at a downstream position of the compressor 52.

The first branch rerun pipe 241 connects the fourth branch section B4 and a first return section C1 provided at a first individual pipe 21A for the first liquefier 13A to each other. The first return section C1 serves as a pipe confluence at the first individual pipe 21A at an upstream position of the first liquefier 13A. The second branch return pipe 242 connects the fourth branch section B4 and a second return section C2 provided at a second individual pipe 21B for the second liquefier 13B to each other. The second return section C2 serves as a pipe confluence at the second individual pipe 21B at an upstream position of the second liquefier 13B. Each of the first return section C1 and the second return section C2 preferably serves as the buffer tank 12 illustrated in Fig. 1. Arrangement of such a buffer tank 12 achieves absorbing of a time fluctuation and a pressure fluctuation concerning an amount of returned hydrogen gas.

The sixth valve 46 opens and closes the reutilization pipe 25. If desired, the reutilization pipe 25 may be provided with a compressor that compresses hydrogen gas to send the compressed hydrogen gas to the hydrogen gas utilization facility 53. Examples of the hydrogen gas utilization facility 53 include various kinds of facilities that utilize hydrogen gas for an energy source, such as a power station including a power-generating turbine utilizing hydrogen gas as a fuel, a factory including a boiler utilizing hydrogen gas as a fuel, and other facility. The hydrogen gas utilization facility 53 may precool a transport pipe extending from the liquefied hydrogen storage tank 14 to the carrier 15 as illustrated in Fig. 1 to reach such a temperature as to allow liquefied hydrogen to flow in the pipe before the loading of the liquefied hydrogen.

The fifth valve 45 and the sixth valve 46 are opened or closed to change a supply destination of the hydrogen gas stored in the flush tank 5 to either the return pipe 24 or the reutilization pipe 25. Of course, both the fifth valve 45 and the sixth valve 46 may be opened to send the gas to the return pipe 24 and the reutilization pipe 25 respectively. For instance, the supply destination of the hydrogen gas may be changed to either the return pipe 24 or the reutilization pipe 25 depending on a temperature of the hydrogen gas in the flush tank 5.

In selection of the return pipe 24, the fifth valve 45 is opened and the sixth valve 46 is closed. When the compressor 52 is driven in this state, a circulation route to return the hydrogen gas from the flush tank 5 to the upstream ends of the liquefiers 13A and 13B is established.

As described above, even when each of the liquefiers 13A, 13B is activated to start liquefaction of raw material hydrogen gas, the cooler 31 may not satisfactorily exert the cooling performance during a certain period of time from the activation. Hydrogen flow from the expansion valve 32 thus may be in the form of hydrogen gas or hydrogen fluid having two phases of gas and liquid. The cooling performance of the cooler 31 reduces at suspension of the liquefiers 13A and 13B as well, which results in the same form of the hydrogen flow. As described in the first embodiment, the hydrogen gas or the hydrogen fluid having two phases of gas and liquid flowing in each of the individual pipes 21A and 21B is collected in the flush tank 5, and a liquid component in the flow is vaporized by the vaporizer 51 and converted into hydrogen gas. The compressor 52 is driven to return the hydrogen gas from the flush tank 5 to the individual pipes 21A and 21B respectively at the upstream positions of the liquefiers 13A and 13B through the return pipe 24, and the first and second branch return pipes 241 and 242. The returned hydrogen gas is re-liquefied by the liquefiers 13A and 13B. In other words, the configuration enables production of liquefied hydrogen by reutilizing hydrogen generated at activation or suspension of each of the liquefiers 13A and 13B and not having been completely liquefied.

In selection of the reutilization pipe 25, the fifth valve 45 is closed and the sixth valve 46 is opened. The hydrogen gas in the flush tank 5 can be sent to the hydrogen gas utilization facility 53 through the reutilization pipe 25 in response to the operations of the valves. This configuration consequently enables establishment of a line involving: conversion of hydrogen fluid generated at activation or suspension of each of the liquefiers 13A and 13B and not having been completely liquefied into hydrogen gas in the flush tank 5; and reutilization of the converted hydrogen gas in the hydrogen gas utilization facility 53.

### [Third embodiment]

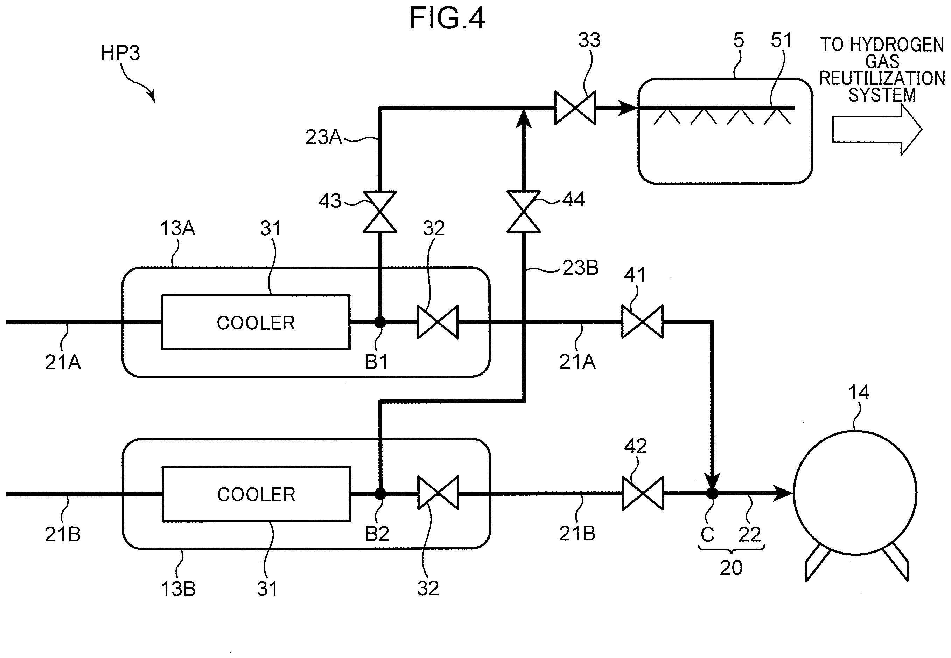

Fig. 4 is a system diagram illustrating a hydrogen plant HP3 according to the third embodiment. The hydrogen plant HP3 according to the embodiment differs from the hydrogen plant HP1 according to the first embodiment in branch sections where a first branch pipe 23A and a second branch pipe 23B branch. The first branch pipe 23A branches from a first individual pipe 21A at a first branch section B1 located between a cooler 31 and an expansion valve 32 in a first liquefier 13A. The second branch pipe 23B branches from a second individual pipe 21B at a second branch section B2 located between a cooler 31 and an expansion valve 32 in a second liquefier 13B.

Passing of raw material hydrogen gas through the expansion valve 32 means a final step of liquefaction of the raw material hydrogen gas in each of the liquefiers 13A and 13B. In other words, keeping the hydrogen gas from passing through the expansion valve 32 results in preventing the raw material hydrogen from liquefaction. The hydrogen plant HP3 according to the third embodiment enables taking-out of the raw material hydrogen gas having not been satisfactorily cooled from the individual pipes 21A and 21B before the hydrogen gas passes through their respective expansion valves 32. The configuration thus minimizes a generation amount of hydrogen flow having two phases of gas and liquid, and prevents such hydrogen flow having two phases of gas and liquid from advancing to each of the first branch pipe 23A and the second branch pipe 23B. Generally, when such fluid having two phases of gas and liquid flows in a pipe, the fluid may damage the pipe or make the pipe vibrate. In this respect, the hydrogen plant HP3 having the above-described configuration can avoid these disadvantages.

A decompression valve 33 is provided between respective downstream ends of the first branch pipe 23A and the second branch pipe 23B, and the flush tank 5. In the hydrogen plant HP3, raw material hydrogen gas, which has not passed through the expansion valves 32 at activation or suspension of the liquefiers 13A and 13B, is taken out from each of the individual pipes 21A and 21B. That is to say, the hydrogen gas having not been decompressed through the expansion valve 32 is taken out. The flush tank 5 may be required to have a pressure resistance structure for hydrogen gas having a high pressure to flow into the flush tank 5. This leads to a cost increase. In this regard, the decompression valve 33 arranged in the aforementioned manner allows hydrogen gas having a reduced pressure to flow into the flush tank 5. This results in reducing the burden on the flush tank 5 to have pressure resistance.

### [Summary of the disclosure]

The embodiments described in detail heretofore cover the disclosure including the following configurations.

A hydrogen plant according to a first feature of the present disclosure includes: hydrogen liquefiers that convert hydrogen gas into liquefied hydrogen; individual pipes respectively belonging to the hydrogen liquefiers and serving as hydrogen flow passages; a confluent pipe including a confluence where downstream ends of the individual pipes of the hydrogen liquefiers meet to combine to one, and a collecting pipe located at a downstream position of the confluence; and branch pipes respectively branching from the individual pipes to each take out hydrogen flow having a phase of gas or two phases of gas and liquid.

The first feature enables taking-out of hydrogen flow having a phase of gas or two phases of gas and liquid not having been completely liquefied through each of the branch pipes respectively branching from the individual pipes. In other words, this configuration enables taking-out of the hydrogen flow having a phase of gas or two phases of gas and liquid from each of the individual pipes before the hydrogen flow reaches the confluence. The configuration hence suppresses mixing the liquefied hydrogen with a degree of supercooling and the gaseous hydrogen each other in the confluent pipe when a part of the hydrogen liquefiers arranged parallel to each other in the hydrogen plant are activated or suspended.

The hydrogen plant according a second feature, in the first feature of the hydrogen plant, further includes a collecting tank located at the downstream ends of the branch pipes to receive the hydrogen flow.

According to the second feature, the collecting tank can accommodate hydrogen having a phase of gas or two phases of gas and liquid and having been taken out through the branch pipe. The configuration accordingly facilitates reutilization of the hydrogen having been taken out from the branch pipe.

In the hydrogen plant according a third feature, in the second feature of the hydrogen plant, the collecting tank fulfills heat exchange and decompression to vaporize a liquid component in the received hydrogen flow.

In the third feature, even when the collecting tank collects hydrogen having two phases of gas and liquid, the collecting tank achieves the heat exchange and the decompression to vaporize a liquid component in the collected hydrogen. This configuration allows the hydrogen to flow in a gaseous state from the collecting tank to a reutilization destination to reutilize the collected hydrogen.

The hydrogen plant according a fourth feature, in the second or third feature of the hydrogen plant, further includes a return pipe that returns hydrogen gas from the collecting tank to an upstream end of each of the hydrogen liquefiers.

In the fourth feature, a circulation route to return the hydrogen gas to the upstream ends of the hydrogen liquefiers through the branch pipes and the collecting tank is established. The configuration thus enables production of liquefied hydrogen by reutilizing hydrogen generated at activation or suspension of each of the hydrogen liquefiers and not having been completely liquified.

The hydrogen plant according a fifth feature, in the second or third feature of the hydrogen plant, further includes a reutilization pipe that guides hydrogen gas from the collecting tank to another hydrogen gas utilization facility.

The fifth feature enables sending of the hydrogen gas accommodated in the collecting tank to the hydrogen gas utilization facility through the reutilization pipe and reutilization of the hydrogen gas at the facility.

The hydrogen plant according a sixth feature, in the first to fifth features of the hydrogen plant, further includes: a switch device that changes a flow destination of the hydrogen flow at a downstream position of each of the hydrogen liquefiers to either the collecting pipe or any one of the branch pipes on the basis of a temperature of the hydrogen flow in each of the individual pipes of the hydrogen liquefiers.

The sixth feature enables determination as to whether hydrogen flow is in the form of liquefied hydrogen, or hydrogen having a phase of gas or two phases of gas and liquid by acquiring a temperature of the hydrogen flow. The configuration hence reliably guides the hydrogen flow to either the collecting pipe or any of the branch pipes.

In the hydrogen plant according a seventh feature, in the first to sixth features of the hydrogen plant, each of the hydrogen liquefiers includes a cooler that cools raw material hydrogen gas, and an expansion valve that expands and liquefies the hydrogen gas cooled by the cooler, and each of the branch pipes branches from corresponding one of the individual pipes between an outlet of the expansion valve and the confluence.

The seventh feature in which each branch pipe branches from the associated individual pipe at the downstream position of the expansion valve enables arrangement of a branch section of the branch pipe on an outside of the hydrogen liquefier. The configuration hence facilitates arrangement of the branch pipe, and further allows for later attachment of such a branch pipe to an already-established hydrogen plant.

In the hydrogen plant according to an eighth feature, in the first to sixth features of the hydrogen plant, each of the hydrogen liquefiers includes a cooler that cools raw material hydrogen gas, and an expansion valve that expands and liquefies the hydrogen gas cooled by the cooler, and each of the branch pipes branches from corresponding one of the individual pipes between the cooler and the expansion valve.

The eighth feature enables taking-out of raw material hydrogen gas from each individual pipe before the hydrogen gas passes through the associated expansion valve that liquefies the hydrogen gas. The configuration thus minimizes a generation amount of hydrogen flow having two phases of gas and liquid at activation or suspension of the associated hydrogen liquefier.

### Description for reference signs

13 liquefier (hydrogen liquefier)
13A, 13B first liquefier, second liquefier (hydrogen liquefier)
2 transport pipe
20 confluent pipe
21A, 21B first individual pipe, second individual pipe (individual pipe)
22 collecting pipe
23A, 23B first branch pipe, second branch pipe (branch pipe)
24 return pipe
25 reutilization pipe
31 cooler
32 expansion valve
41, 42, 43, 44 first valve, second valve, third valve, fourth valve (switch)
5 flush tank (collecting tank)
C confluence
HP hydrogen plant

## Claims

1. A hydrogen plant, comprising:
hydrogen liquefiers that convert hydrogen gas into liquefied hydrogen;
individual pipes respectively belonging to the hydrogen liquefiers and serving as hydrogen flow passages;
a confluent pipe including a confluence where downstream ends of the individual pipes of the hydrogen liquefiers meet to combine to one, and a collecting pipe located at a downstream position of the confluence; and
branch pipes respectively branching from the individual pipes to each take out hydrogen flow having a phase of gas or two phases of gas and liquid.

2. The hydrogen plant according to claim 1, further comprising
a collecting tank located at the downstream ends of the branch pipes to receive the hydrogen flow.

3. The hydrogen plant according to claim 2, wherein the collecting tank fulfills heat exchange and decompression to vaporize a liquid component in the received hydrogen flow.

4. The hydrogen plant according to claim 2 or 3, further comprising
a return pipe that returns hydrogen gas from the collecting tank to an upstream end of each of the hydrogen liquefiers.

5. The hydrogen plant according to claim 2 or 3, further comprising
a reutilization pipe that guides hydrogen gas from the collecting tank to another hydrogen gas utilization facility.

6. The hydrogen plant according to any one of claims 1 to 3, further comprising
a switch device that changes a flow destination of the hydrogen flow at a downstream position of each of the hydrogen liquefiers to either the collecting pipe or any of the branch pipes on the basis of a temperature of the hydrogen flow in each of the individual pipes of the hydrogen liquefiers.

7. The hydrogen plant according to any one of claims 1 to 3, wherein each of the hydrogen liquefiers includes a cooler that cools raw material hydrogen gas, and an expansion valve that expands and liquefies the hydrogen gas cooled by the cooler, and
each of the branch pipes branches from corresponding one of the individual pipes between an outlet of the expansion valve and the confluence.

8. The hydrogen plant according to any one of claims 1 to 3, wherein each of the hydrogen liquefiers includes a cooler that cools raw material hydrogen gas, and an expansion valve that expands and liquefies the hydrogen gas cooled by the cooler, and
each of the branch pipes branches from corresponding one of the individual pipes between the cooler and the expansion valve.
